# EUROPÄISCHE PATENTANMELDUNG

(11) **EP 1 052 749 A1**
(43) Veröffentlichungstag der Anmeldung: **15.11.2000**
(21) Anmeldenummer: 00109442.4
(22) Anmeldetag: 03.05.2000
(51) Int. Cl.: H02B 1/052

(54) **Tragschiene für ein elektrisches Gerät**

(30) Priorität: 14.05.1999 DE 19922344
(71) Anmelder: SIEMENS AKTIENGESELLSCHAFT, 80333 München (DE)
(72) Erfinder: Feuerer, Georg, Dipl.-Ing. (FH), 93133 Burglengenfeld (DE); Stang, Alfred, Dipl.-Ing. (FH), 92224 Amberg (DE)

(57) **Zusammenfassung**

Tragschiene mit zwei Schenkeln (2, 3), an denen ein Gehäuse (4) eines elektrischen Geräts unter Federkraft verrastbar ist, wobei die Tragschiene (1) ein Halteelement (8) aufweist, das im verrasteten Zustand des Gehäuses (4) vom Gehäuse (4) überdeckt ist und das mit dem Gehäuse (4) derart zusammenwirkt, daß das Gehäuse (4) auf der Tragschiene (1) im wesentlichen unverschieblich fixiert ist.

## Beschreibung

Die vorliegende Erfindung betrifft eine Tragschiene mit zwei Schenkeln, an denen ein Gehäuse eines elektrischen Geräts unter Federkraft verrastbar ist.

Derartige Tragschienen sind allgemein bekannt.

Im Stand der Technik wurde früher das Gehäuse mit einem Gummipfropfen versehen, der das Verschieben des Gehäuses auf der Tragschiene erschweren sollte. Aufgrund des Reibschlusses zwischen dem Gummipfropfen und der Tragschiene wurde ein Verschieben des Gehäuses aber nur erschwert, nicht verhindert.

Aus dem Datenblatt 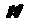 Rittal Mini-PLS bis 250 A" ist eine Tragschiene bekannt, bei der an den seitlichen Wänden Haltebleche vorstehen. Damit ist ein Verschieben eines auf die Tragschiene aufgerasteten elektrischen Geräts auf die Länge der Tragschiene begrenzt. Innerhalb der Tragschiene ist ein Verschieben der elektrischen Geräte aber nach wie vor möglich.

Die Aufgabe der vorliegenden Erfindung besteht darin, eine Tragschiene zu schaffen, bei der das elektrische Gerät besser gegen seitliches Verschieben gesichert ist.

Die Aufgabe wird dadurch gelöst, daß die Tragschiene ein Halteelement aufweist, das im verrasteten Zustand des Gehäuses vom Gehäuse überdeckt ist und das mit dem Gehäuse derart zusammenwirkt, daß das Gehäuse auf der Tragschiene im wesentlichen unverschieblich fixiert.

Konstruktiv kann das Zusammenwirken von Gehäuse und Halteelement z. B. dadurch bewirkt werden, daß das Gehäuse im verrasteten Zustand einen der Schenkel mit mindestens zwei Verbindungselementen hintergreift und daß das Halteelement im verrasteten Zustand des Gehäuses zwischen den mindestens zwei Verbindungselementen angeordnet ist. Denn damit ist die Restverschiebung des Gehäuses auf die Differenz des Abstands der Verbindungselemente und der Breite des Halteelements beschränkt.

Wenn die wirksame Halteelementbreite im wesentlichen gleich dem Verbindungselementabstand ist, ist eine praktisch spielfreie Befestigung des elektrischen Geräts auf der Tragschiene möglich.

Wenn das Halteelement mindestens eine Justierschräge zum automatischen Justieren des Gehäuses beim Kontaktieren der mindestens zwei Verbindungselemente mit dem einen der Schenkel aufweist, ergibt sich beim Montieren des elektrischen Geräts auf der Tragschiene eine automatische seitliche Justierung.

Wenn das Gehäuse eine Gehäusebreite und die Tragschiene eine Tragschienenlänge aufweist, die Tragschienenlänge größer als die Gehäusebreite ist und das Gehäuse in mindestens zwei Positionen mit der Tragschiene verrastbar ist, ergibt sich eine flexiblere Montage des elektrischen Geräts.

Wenn das Halteelement lösbar in eine Halteelementausnehmung der Tragschiene eingeführt ist, insbesondere federnd in der Halteelementausnehmung verrastet ist, ist die Tragschiene nebst Halteelement fertigungstechnisch besonders einfach herstellbar. Darüber hinaus ist das Halteelement in diesem Fall auch nachträglich montierbar, wenn sich dies im Betrieb als erforderlich erweisen sollte.

Wenn die Tragschiene zur Aufnahme des Halteelements mindestens eine weitere Halteelementausnehmung aufweist und die Halteelementausnehmungen um weniger als die Gerätebreite voneinander beabstandet sind, ist eine fein abgestufte seitliche Justierung des elektrischen Geräts bezüglich der Tragschiene möglich.

Weitere Vorteile und Einzelheiten ergeben sich aus der nachfolgenden Beschreibung eines Ausführungsbeispiels. Dabei zeigen in Prinzipdarstellung
- FIG 1: eine Tragschiene mit einem elektrischen Gerät von der Seite,
- FIG 2: die Tragschiene mit dem elektrischen Gerät von FIG 1 von hinten und
- FIG 3: die Tragschiene perspektivisch von vorne.

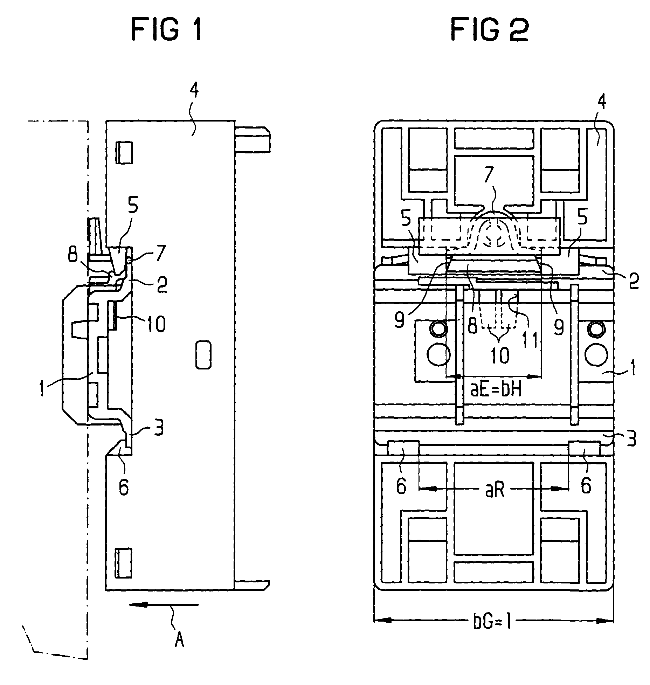

Gemäß FIG 1 weist eine Tragschiene 1 einen Einhakschenkel 2 und einen Rastschenkel 3 auf. Ein Gehäuse 4 eines elektrischen Gerätes ist mit einhakschenkelseitigen Verbindungselementen 5 am Einhakschenkel 2 einhakbar und durch Verschwenken in Richtung des Pfeiles A auf den Rastschenkel 3 zu mit rastschenkelseitigen Verbindungselementen 6 an der Tragschiene 1 verrastbar. Im verrasteten Zustand hintergreifen die einhakschenkelseitigen Verbindungselemente 5 den Einhakschenkel 2, die rastschenkelseitigen Verbindungselemente 6 den Rastschenkel 3.

Im Bereich der einhakschenkelseitigen Verbindungselemente 5 ist im Gehäuse 4 eine Bügelfeder 7 gelagert. Die Bügelfeder 7 wird beim Aufrasten des Gehäuses 4 auf die Tragschiene 1 gespannt. Das Gehäuse 4 ist somit im verrasteten Zustand unter Federkraft an der Tragschiene 1 verrastet.

Gemäß FIG 2 weist das Gehäuse eine Gehäusebreite bG und die Tragschiene eine Tragschienenlänge 1 auf. Ferner ist ersichtlich, daß je zwei einhak- bzw. rastschenkelseitige Verbindungselemente 5, 6 vorhanden sind. Die einhakschenkelseitigen Verbindungselemente 5 sind um einen einhakschenkelseitigen Verbindungselementabstand aE voneinander beabstandet, die rastschenkelseitigen Verbindungselemente 6 um einen rastschenkelseitigen Verbindungselementabstand aR.

Die Tragschiene 1 weist ein Halteelement 8 auf, das im verrasteten Zustand des Gehäuses 4 zwischen den einhakschenkelseitigen Verbindungselementen 5 angeordnet ist und vom Gehäuse 4 überdeckt wird. Zwischen den einhakschenkelseitigen Verbindungselementen 5 weist das Halteelement 8 eine wirksame Halteelementbreite bH auf, die im wesentlichen gleich dem einhakschenkelseitigen Verbindungselementabstand aE ist. Das Halteelement 8 wirkt also mit den Verbindungselementen 5 - und damit im Ergebnis auch dem Gehäuse 4 - derart zusammen, daß das Gehäuse 4 im verrasteten Zustand praktisch spielfrei auf der Tragschiene 1 gehalten wird.

Gemäß FIG 2 weist das Halteelement 8 Justierschrägen 9 auf. Damit ist das Gehäuse 4 beim Kontaktieren der einhakschenkelseitigen Verbindungselemente 5 mit dem Einhakschenkel 2 automatisch auf der Tragschiene 1 justiert.

Das Halteelement 9 weist zwei federnde Steckstifte 10 auf. Mittels der Steckstifte 10 ist das Halteelement 8 lösbar in eine Halteelementausnehmung 11 der Tragschiene 1 einführbar. Im eingesteckten Zustand ist das Halteelement 8 somit federnd in der Halteelementausnehmung 11 verrastet. Es ist dadurch mit der Tragschiene 1 verbunden.

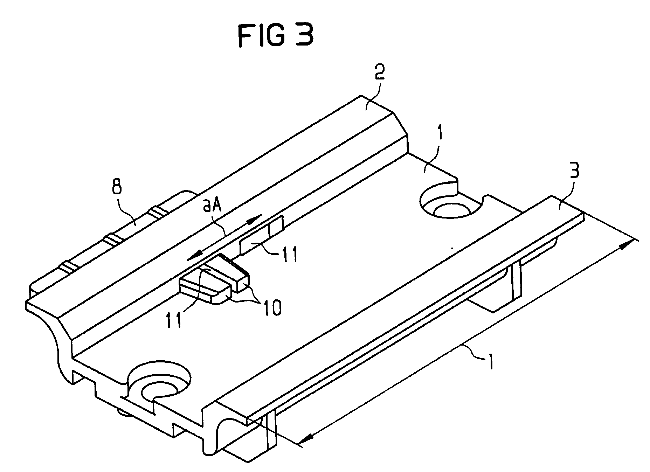

Die Tragschienenlänge 1 kann, wie in FIG 2 dargestellt, so groß wie die Gehäusebreite bG sein. Es ist aber auch möglich, daß die Tragschienenlänge 1 größer als die Gehäusebreite bG ist. Dies ist beispielhaft in FIG 3 dargestellt. Die Tragschienenlänge 1 ist dabei gemäß FIG 3 nur geringfügig größer als die Gehäusebreite bG.

Gemäß FIG 3 weist die Tragschiene 1 zwei Halteelementausnehmungen 11 auf. Die Halteelementausnehmnungen 11 sind um einen Ausnehmungsabstand aA voneinander beabstandet, der kleiner als die Gerätebreite bG ist. Je nachdem, ob das Halteelement 8 in die eine oder die andere der Halteelementausnehmungen 11 eingesetzt ist, ist das Gehäuse 4 linksbündig oder rechtsbündig mit der Tragschiene 1 verrastbar.

Das Gehäuse 4 ist in der Regel aus Kunststoff. Die Tragschiene 1 und das Halteelement 8 können nach Bedarf aus Kunststoff oder aus Metall hergestellt sein.

Gemäß Ausführungsbeispiel ist das Halteelement 8 einhakschenkelseitig angeordnet. Es könnte aber auch rastschenkelseitig angeordnet sein. Weiterhin ist es möglich, die Halteelementbreite bH kleiner als den entsprechenden Verbindungselementabstand aE bzw. aR zu halten. In diesem Fall wäre ein geringfügiges Verschieben des Gehäuses 4 im verrasteten Zustand möglich.

## Patentansprüche

1. Tragschiene mit zwei Schenkeln (2, 3), an denen ein Gehäuse (4) eines elektrischen Geräts unter Federkraft verrastbar ist,
**dadurch gekennzeichnet**,
daß die Tragschiene (1) ein Halteelement (8) aufweist, das im verrasteten Zustand des Gehäuses (4) vom Gehäuse (4) überdeckt ist und das mit dem Gehäuse (4) derart zusammenwirkt, daß das Gehäuse (4) auf der Tragschiene (1) im wesentlichen unverschieblich fixiert ist.

2. Tragschiene nach Anspruch 1,
**dadurch gekennzeichnet**,
daß das Gehäuse (4) im verrasteten Zustand einen der Schenkel (2, 3) mit mindestens zwei Verbindungselementen (5, 6) hintergreift und daß das Halteelement (8) im verrasteten Zustand des Gehäuses (4) zwischen den mindestens zwei Verbindungselementen (5, 6) angeordnet ist.

3. Tragschiene nach Anspruch 2,
**dadurch gekennzeichnet**,
daß die mindestens zwei Verbindungselemente (5) um einen Verbindungselementabstand (aE) voneinander beabstandet sind, daß das Halteelement (8) zwischen den mindestens zwei Verbindungselementen (5) eine wirksame Halteelementbreite (bH) aufweist und daß die wirksame Halteelementbreite (bH) im wesentlichen gleich dem Verbindungselementabstand (aE) ist.

4. Tragschiene nach Anspruch 3,
**dadurch gekennzeichnet**,
daß das Halteelement (8) mindestens eine Justierschräge (9) zum automatischen Justieren des Gehäuses (4) beim Kontaktieren der mindestens zwei Verbindungselemente (5) mit dem einen der Schenkel (2) aufweist.

5. Tragschiene nach einem der obigen Ansprüche,
**dadurch gekennzeichnet**,
daß das Gehäuse (4) eine Gehäusebreite (bG) und die Tragschiene (1) eine Tragschienenlänge (1) aufweist, daß die Tragschienenlänge (1) größer als die Gehäusebreite (bG) ist und daß das Gehäuse (4) in mindestens zwei Positionen mit der Tragschiene (1) verrastbar ist.

6. Tragschiene nach einem der obigen Ansprüche,
**dadurch gekennzeichnet**,
daß das Halteelement (8) lösbar in eine Halteelementausnehmung (11) der Tragschiene (1) eingeführt ist, insbesondere federnd in der Halteelementausnehmung (11) verrastet ist.

7. Tragschiene nach Anspruch 5 und 6,
**dadurch gekennzeichnet**,
daß die Tragschiene (1) zur Aufnahme des Halteelements (8) mindestens eine weitere Halteelementausnehmung (11) aufweist und daß die Halteelementausnehmungen (11) um weniger als die Gerätebreite (bG) voneinander beabstandet sind.
